# FASCICULE DE BREVET EUROPEEN

(11) **EP 0 558 384 B1**
(45) Date de publication et mention de la délivrance du brevet: **03.01.1996**
(21) Numéro de dépôt: 93400423.5
(22) Date de dépôt: 18.02.1993
(51) Int. Cl.: B60K 11/08

(54) **Dispositif de régulation du débit d'air traversant un échangeur de chaleur comportant un faisceau de tube à ailettes et échangeur de chaleur équipé d'un tel dispositif**
Vorrichtung zur Einstellung des Luftdurchflusses durch einen Wärmetauscher mit Rippenrohrbündel und Wärmetauscher mit einer solchen Vorrichtung
Device for regulating the air flow through a heat exchanger having a finned tube bundle and heat exchanger provided with such a device

(30) Priorité: 24.02.1992 FR 9202108
(43) Date de publication de la demande: 01.09.1993
(73) Titulaire: VALEO THERMIQUE MOTEUR, F-78320 Le Mesnil Saint-Denis (FR)
(72) Inventeur: Collette, Thierry, F-78000 Versailles (FR)
(74) Mandataire: Gamonal, Didier

(56) Documents cités:
- EP-A- 0 179 304
- EP-A- 0 308 601
- DE-A- 2 744 453
- DE-A- 3 420 419
- FR-A- 980 935
- FR-A- 1 505 527
- FR-A- 2 191 493

## Description

L'invention concerne un dispositif pour la régulation du débit d'air traversant un échangeur de chaleur comportant un faisceau de tubes à ailettes, en particulier un radiateur de refroidissement d'un moteur de véhicule automobile. Elle concerne également un échangeur de chaleur équipé d'un tel dispositif.

Dans le cas d'un radiateur du type précité, les tubes du faisceau sont parcourus par un fluide, généralement de l'eau glycolée, servant au refroidissement du moteur et refroidi par échange thermique avec de l'air qui traverse le faisceau en s'écoulant entre les ailettes.

Il est connu, par exemple d'après FR-A-2 191 493, de disposer, sur le trajet d'écoulement de l'air traversant le radiateur, un dispositif de régulation comportant une multiplicité de volets montés à pivotement autour d'axes parallèles et propres à prendre une multiplicité de positions angulaires différentes, comprises entre une position d'ouverture et une position de fermeture, sous l'action de moyens de commande appropriés.

On obtient ainsi un dispositif s'apparentant à une jalousie qui permet d'ajuster le débit d'air traversant le radiateur et d'optimiser l'efficacité du radiateur ainsi que la température de fonctionnement du moteur.

Dans les dispositifs de régulation de ce type, les volets sont munis chacun d'une paire de pivots et portés par un cadre rigide qui est placé à proximité de l'échangeur de chaleur, le plus souvent en amont de celui-ci par rapport au sens d'écoulement de l'air, pour modifier le débit de ce dernier.

Ces dispositifs connus ont pour inconvénient d'être encombrants et donc d'occuper de la place dans le compartiment moteur d'un véhicule automobile. Par ailleurs, ils possèdent une structure complexe et fragile qui nécessite un grand nombre de pièces et qui est souvent la source de défaillances de fonctionnement.

L'invention a notamment pour but de surmonter les inconvénients précités.

C'est, en particulier, un but de l'invention de procurer un dispositif de régulation du type précité qui est peu encombrant et possède une structure particulièrement simple procurant un fonctionnement particulièrement fiable.

L'invention propose en conséquence un dispositif de régulation du type défini en introduction, dans lequel chacun des volets est formé d'une seule pièce par moulage d'une matière plastique et comprend une plaque fixe propre à être intercalée entre deux ailettes du faisceau et à être traversée par les tubes du faisceau ainsi qu'une plaque mobile formant volet et reliée à la plaque fixe par au moins un pont de matière formant charnière autour d'un axe de pivotement.

Ainsi, le dispositif de régulation de l'invention peut être intégré à un échangeur de chaleur lors du montage de celui-ci pour former un ensemble de structure particulièrement compacte dans lequel seules les plaques mobiles respectives des volets font saillie en dehors du faisceau de l'échangeur de chaleur.

Il n'est donc plus nécessaire de prévoir un cadre rigide supportant chaque volet par une paire de pivots, comme c'était le cas dans la technique antérieure.

De plus, les volets peuvent être réalisés facilement par moulage d'une matière plastique choisie pour qu'ils aient à la fois une bonne résistance mécanique et qu'ils autorisent à chaque fois un pivotement de la plaque mobile par rapport à la plaque fixe, et cela autour du ou des ponts de matière les reliant, sans risque de rupture de ce(s) pont(s) même après une longue période de fonctionnement.

Dans une forme de réalisation préférée de l'invention, la plaque fixe possède une configuration géométrique analogue à celle d'une ailette du faisceau et elle comporte une multiplicité de trous pour le passage des tubes du faisceau et le sertissage de la plaque sur les tubes.

Ainsi, les plaques fixes respectives des volets peuvent être intercalées entre les ailettes du faisceau lors de l'assemblage de ce dernier et être serties sur les tubes.

De préférence, la plaque fixe d'un volet comporte, à proximité de l'axe de pivotement, au moins un bec en saillie propre à servir de butée à la plaque mobile d'un volet adjacent lorsque ce dernier est en position de fermeture.

La plaque mobile d'un volet possède avantageusement une forme généralement rectangulaire s'étendant sur sensiblement la même longueur que la plaque fixe. Bien que la plaque fixe et la plaque mobile puissent être reliées par un pont de matière continu s'étendant sur toute leur longueur, on préfère utiliser au moins deux ponts de matière distincts, de faible épaisseur, situés à distance l'un de l'autre dans la direction de l'axe de pivotement.

On facilite ainsi le pivotement de la plaque mobile par rapport à la plaque fixe, du fait que la résistance au pivotement est plus faible.

Les ponts de matière sont avantageusement formés chacun par amincissement de la matière pour former ce que l'on appelle une "charnière film".

Dans une forme de réalisation préférée de l'invention, chacun des volets est formé par moulage de polypropylène non chargé.

De préférence, les axes de pivotement des volets sont coplanaires et les moyens de commande de l'invention comprennent un bras déplaçable en translation suivant une direction dont l'axe s'étend orthogonalement aux axes de pivotement des volets et à égale distance de ces derniers, ce bras étant relié à la partie mobile de chaque volet par des moyens d'articulation.

Ces moyens d'articulation comprennent avantageusement une multiplicité de fentes ménagées dans le bras et propres à recevoir chacune un doigt de pivotement porté par la plaque mobile d'un volet, ce doigt de pivotement s'étendant parallèlement à l'axe de pivotement du volet correspondant.

Dans une forme de réalisation préférée de l'invention, les moyens de commande comprennent en outre un organe d'actionnement sensible à la température et propre à agir sur le déplacement en translation du bras à l'encontre d'un ressort de rappel.

Sous un autre aspect, l'invention concerne un échangeur de chaleur du type comportant un faisceau de tubes à ailettes, cet échangeur étant équipé d'un dispositif de régulation selon l'invention, dont les plaques fixes respectives des volets sont intercalées à intervalles réguliers entre les ailettes du faisceau.

Dans la description qui suit, faite seulement à titre d'exemple, on se réfère aux dessins annexés, sur lesquels :
- la figure 1 est une vue schématique de côté, avec arrachement partiel, d'un échangeur de chaleur muni d'un dispositif de régulation de débit d'air selon l'invention;
- la figure 2 est une vue détaillée de côté, avec arrachement partiel, correspondant à la figure 1 et montrant respectivement, en partie supérieure et en partie inférieure, deux positions différentes des volets;
- la figure 3 est une vue de dessus d'un volet du dispositif des figures 1 et 2;
- les figures 4, 5 et 6 sont des vues en coupe partielle, à échelle agrandie, prises respectivement suivant les lignes IV-IV, V-V et VI-VI de la figure 3; et
- la figure 7 est une vue en coupe, à une échelle moins agrandie que celle des figures 4 à 6, prise selon la ligne VII-VII de la figure 3.

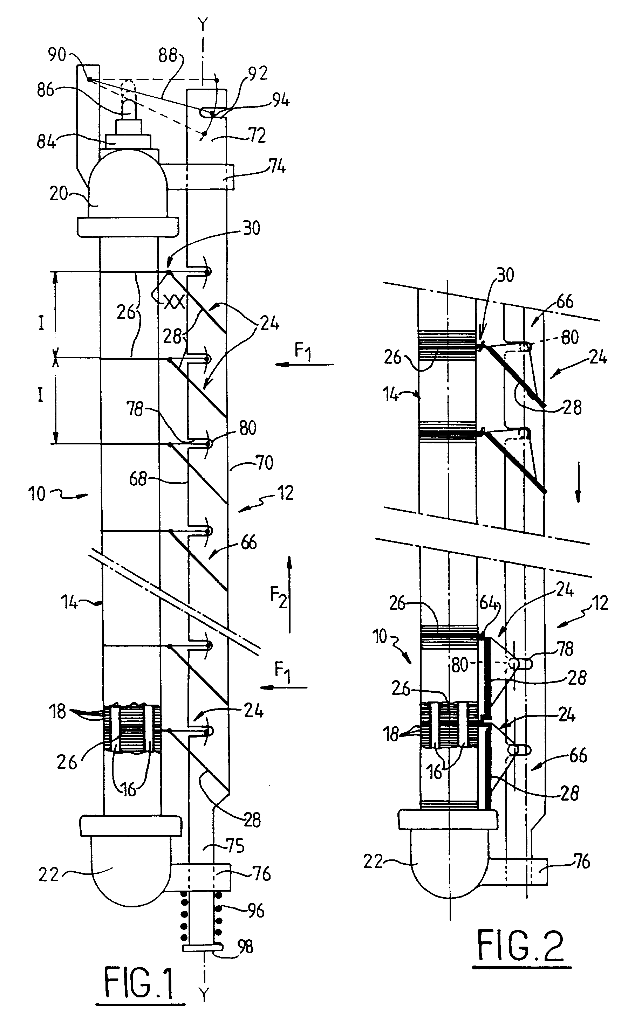

On se réfère tout d'abord à la figure 1 qui représente un échangeur de chaleur 10, dans l'exemple un radiateur de refroidissement pour le moteur d'un véhicule automobile, équipé d'un dispositif de régulation 12 selon l'invention. L'échangeur de chaleur 10 comprend, de façon en soi connue, un faisceau 14 composé d'une multiplicité de tubes 16 parallèles entre eux et traversant une multiplicité d'ailettes 18 parallèles entre elles. Dans l'exemple, le faisceau 14 est composé de quarante tubes disposés en deux rangées de vingt tubes chacune. Le faisceau 14 est relié respectivement à une boîte à eau supérieure 20 et une boîte à eau inférieure 22. L'échangeur de chaleur 10 est destiné à être parcouru par un fluide, par exemple de l'eau glycolée, servant au refroidissement du moteur.

Le dispositif de régulation 12 a pour fonction de réguler le débit d'air traversant le faisceau, comme indiqué par les flèches F₁, pour optimiser la température du fluide circulant dans l'échangeur de chaleur et optimiser ainsi le fonctionnement du moteur.

Le dispositif 12 comprend une multiplicité de volets 24 dont chacun est formé d'une seule pièce par moulage d'une matière plastique et comprend une plaque fixe 26 propre à être intercalée entre deux ailettes 18 du faisceau et à être traversée par les tubes 16 de ce dernier, ainsi qu'une plaque mobile 28 formant volet et reliée à la plaque fixe par au moins un pont de matière 30 formant charnière autour d'un axe de pivotement XX.

Comme le montrent les figures 1 et 2, les plaques fixes 26 des volets 28 sont intercalées à intervalles réguliers I entre les ailettes du faisceau. Les axes de pivotement respectifs XX des volets 24 sont parallèles et coplanaires et tous situés à la même distance du faisceau 14.

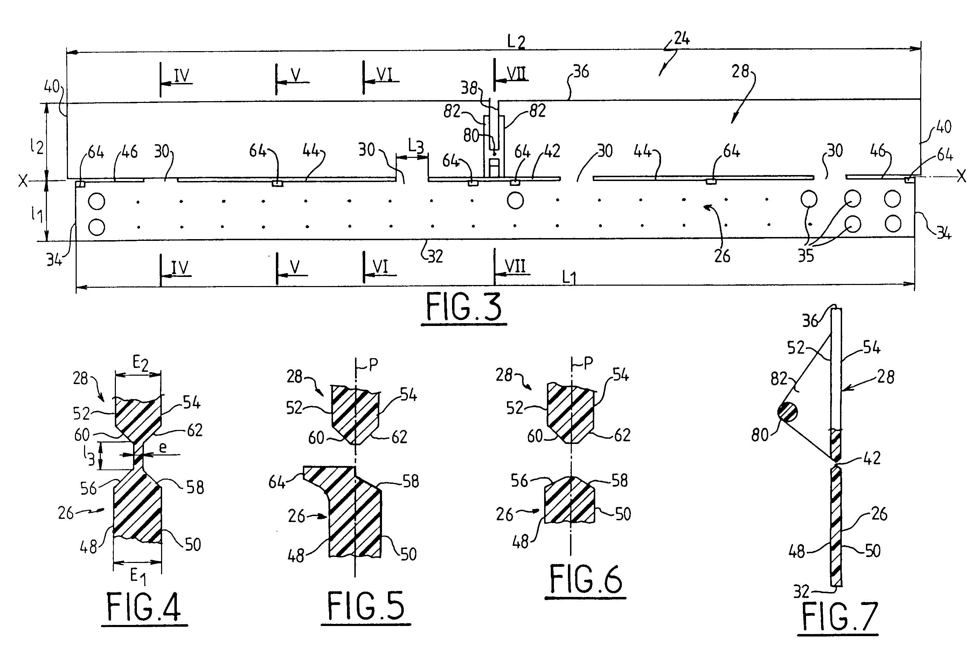

Comme montré plus particulièrement à la figure 3, la plaque 26 présente une configuration géométrique analogue à celle d'une ailette 18, c'est-à-dire ici une forme générale rectangulaire de longueur L₁ et de largeur l₁. La plaque fixe 26 est délimitée extérieurement par un bord longitudinal 32 et par deux bords latéraux opposés 34. La plaque 26 comporte une multiplicité de trous 35 (dans l'exemple, deux rangs de vingt trous chacun) pour le passage des tubes 16 du faisceau.

Bien entendu, et cela sans sortir du cadre de l'invention, il peut être prévu que la plaque 26 soit morcelée et que chaque morceau se situe en regard de la charnière formée par les ponts de matière 30.

La plaque mobile 28 possède une forme générale rectangulaire de longueur L₂ légèrement supérieure à L₁ et de largeur l₂ sensiblement égale à la valeur I précitée. La plaque mobile 28 est délimitée extérieurement par un bord longitudinal 36, interrompu à mi-longueur par une découpe 38, et par deux bords latéraux opposés 40.

Les plaques 26 et 28 sont formées d'une seule pièce par moulage d'une matière plastique, par exemple de polypropylène non chargé. Les plaques 26 et 28 sont réunies entre elles par quatre ponts de matière 30 disposés suivant l'axe de pivotement XX et espacés les uns des autres le long de cet axe. Les ponts de matière 30 délimitent ainsi entre les plaques 26 et 28 une étroite fente centrale 42 et deux étroites fentes latérales 44. Sont également délimitées deux étroites fentes d'extrémité 46 qui débouchent chacune du côté d'un bord 34 et d'un bord 40.

Les ponts de matière 30 permettent à la plaque mobile 28 de pivoter par rapport à la plaque fixe entre une position de pleine ouverture dans laquelle les deux plaques sont dans le prolongement l'une de l'autre et ont un même plan moyen P (figures 3 à 7) et une position de fermeture dans laquelle les deux plaques forment entre elles un angle droit (voir partie inférieure de la figure 2). Chacune des plaques mobiles peut prendre toute position intermédiaire, par exemple celle représentée à la figure 1 ou représentée à la partie supérieure de la figure 2.

Comme montré à la figure 4, la plaque fixe 26 a une épaisseur E₁ et la plaque mobile 28 une épaisseur E₂ sensiblement inférieure à E₁. Le pont de matière 30 est obtenu par un amincissement localisé de la matière qui, dans l'exemple, possède une épaisseur e très nettement inférieure à E₁ ou E₂. Ce pont de matière 30 possède une épaisseur constante et il s'étend sur une longueur L₃ (figure 3) et sur une largeur l₃ (figure 4).

Comme montré à la figure 4, la plaque fixe 26 est limitée par deux faces opposées 48 et 50 et la plaque mobile 28 par deux faces opposées 52 et 54. Chacun des ponts de matière 30 se raccorde aux faces 48 et 50 respectivement par des chanfreins 56 et 58 et aux faces 52 et 54 respectivement par des chanfreins 60 et 62. Les chanfreins 56 et 58 s'étendent sur toute la longueur L₁ de la plaque 26 et les chanfreins 60 et 62 sur toute la longueur de la plaque L₂. Ces chanfreins sont seulement interrompus de place en place par les quatre ponts de matière 30. Par ailleurs, la plaque fixe 26 est munie de six becs 64 qui font saillie par rapport à la face 48 dans la région du chanfrein 56 (figures 3 et 5). Les becs 64 d'une plaque 26 d'un volet sont destinés à servir de butées pour la plaque mobile 28 d'un volet adjacent lorsque ce dernier est en position de fermeture (partie inférieure de la figure 2).

Les ponts de matière 30 forment une "charnière film" autorisant ainsi un débattement facile de la partie mobile 28 de chacun des volets avec un débattement maximal correspondant sensiblement à un angle droit.

Les plaques fixes 28 des volets sont actionnées en synchronisme par des moyens de commande qui comprennent un bras 66 (figures 1 et 2) déplaçable en translation suivant une direction d'axe YY s'étendant orthogonalement aux axes de pivotement XX des volets et à égale distance de ces derniers. Le bras 66 est limité principalement par deux bords longitudinaux 68 et 70 et il possède une extrémité supérieure 72 propre à coulisser à l'intérieur d'un support 74 rattaché à la boîte à eau 20 et une extrémité inférieure 75 propre à coulisser dans un support 76 rattaché à la boîte à eau inférieure 22. Le bras 66 ménage une multiplicité de fentes ouvertes 78 qui s'étendent à partir du bord 68 et qui sont distantes deux à deux du même intervalle I que les volets. Chacune des fentes 78 est destinée à recevoir un doigt de pivotement 80 (figures 1, 2 et 3) porté par la plaque mobile d'un volet. Ce doigt de pivotement s'étend parallèlement à l'axe de pivotement XX du volet et est disposé entre deux nervures 82 de forme générale triangulaire situées à distance l'une de l'autre et disposées de part et d'autre de la découpe 38. Ainsi, lorsque le bras 66 est déplacé en translation dans un sens ou dans un autre, les parties mobiles 28 des volets peuvent s'ouvrir ou se fermer en synchronisme.

Les moyens de commande comprennent en outre un organe d'actionnement 84 sensible à la température qui, dans l'exemple, est constitué par un élément à cire dilatable monté sur la boîte à eau 20 (figure 1). L'organe 84 comprend un poussoir 86 dont la course est fonction de la température du fluide circulant dans l'échangeur et en particulier dans la boîte à eau 20. Le poussoir 86 agit sur un levier 88 dont une extrémité est articulée sur un support 90 rattaché à la boîte à eau et dont l'autre extrémité est munie d'un pivot 92 s'engageant dans une fente 94 ménagée dans l'extrémité 72 du bras.

L'extrémité inférieure 75 du bras 66 comporte, dans sa partie dépassant le support 76, un ressort hélicoïdal de compression 96 s'appuyant sur une butée d'extrémité 98.

Ainsi, lorsque la température du fluide de refroidissement se situe à un faible niveau, le poussoir 86 est en position rentrée et le bras 66 est en position basse (voir partie inférieure de la figure 2) commandant les volets en position de fermeture. De ce fait, l'air ne peut traverser l'échangeur de chaleur. Si la température du fluide augmente, la course du poussoir 86 augmente d'autant, ce qui provoque le pivotement du levier 88 et par conséquent le déplacement vers le haut (flèche F₂) du bras et par conséquent l'ouverture progressive des volets.

Bien entendu, il est possible de prévoir d'autres types de moyens de commande qui prennent en compte non seulement la température du fluide circulant dans l'échangeur de chaleur, mais aussi d'autres paramètres, par exemple la température de l'air assurant le refroidissement de l'échangeur.

Le dispositif de régulation de l'invention peut être facilement intégré au faisceau d'un échangeur de chaleur en intercalant les plaques fixes respectives des volets à intervalles réguliers entre les ailettes du faisceau. Ces plaques fixes sont enfilées sur les tubes du faisceau et serties ensuite à ces derniers.

## Revendications

1. Dispositif de régulation du débit d'air traversant un échangeur de chaleur comportant un faisceau de tubes à ailettes, ce dispositif comprenant une multiplicité de volets (24) montés à pivotement autour d'axes parallèles (XX) et propres à prendre une multiplicité de positions angulaires différentes comprises entre une position d'ouverture et une position de fermeture, ainsi que des moyens de commande pour actionner les volets, caractérisé en ce que chacun des volets (24) est formé d'une seule pièce par moulage d'une matière plastique et comprend une plaque fixe (26) propre à être intercalée entre deux ailettes (18) du faisceau et à être traversée par les tubes (16) du faisceau ainsi qu'une plaque mobile (28) formant volet et reliée à la plaque fixe par au moins un pont de matière (30) formant charnière autour d'un axe de pivotement (XX).

2. Dispositif selon la revendication 1, caractérisé en ce que la plaque fixe (26) possède une configuration géométrique analogue à celle d'une ailette (16) et comporte une multiplicité de trous (35) pour le passage des tubes (16) du faisceau et le sertissage de la plaque sur les tubes.

3. Dispositif selon la revendication 2, caractérisé en ce que la plaque fixe (26) comporte, à proximité de l'axe de pivotement (XX), au moins un bec (64) en saillie propre à servir de butée à la plaque mobile (28) d'un volet adjacent, lorsque ce dernier est en position de fermeture.

4. Dispositif selon l'une des revendications 1 à 3, caractérisé en ce que la plaque mobile (28) possède une forme générale rectangulaire s'étendant sur sensiblement la même longueur que la plaque fixe (26) et en ce que la plaque fixe (26) et la plaque mobile (28) sont reliées entre elles par au moins deux ponts de matière (30) de faible épaisseur distants l'un de l'autre dans la direction de l'axe de pivotement (XX).

5. Dispositif selon l'une des revendications 1 à 4, caractérisé en ce que le ou chaque pont de matière (30) est formé par amincissement de la matière pour définir une charnière film.

6. Dispositif selon l'une des revendications 1 à 5, caractérisé en ce que chacun des volets (24) est formé par moulage de polypropylène non chargé.

7. Dispositif selon l'une des revendications 1 à 6, dans lequel les axes de pivotement (XX) des volets (24) sont coplanaires, caractérisé en ce que les moyens de commande comprennent un bras (66) déplaçable en translation suivant une direction d'axe (YY) s'étendant orthogonalement aux axes de pivotement (XX) des volets et à égale distance de ces derniers, ce bras (66) étant relié à la plaque mobile (28) de chaque volet par des moyens d'articulation (78,80).

8. Dispositif selon la revendication 7, caractérisé en ce que les moyens d'articulation comprennent une multiplicité de fentes (78) ménagées dans le bras (66) et propres à recevoir chacune un doigt de pivotement (80) porté par la plaque mobile (28) d'un volet, ce doigt de pivotement s'étendant parallèlement à l'axe de pivotement (XX) du volet.

9. Dispositif selon l'une des revendications 7 et 8, caractérisé en ce que les moyens de commande comprennent en outre un organe d'actionnement (84) sensible à la température et propre à agir sur le déplacement en translation du bras, à l'encontre d'un ressort de rappel (96).

10. Echangeur de chaleur comportant un faisceau de tubes à ailettes, caractérisé en ce qu'il est équipé d'un dispositif (12) de régulation de débit d'air selon l'une des revendications 1 à 9, dont les plaques fixes respectives (26) des volets (24) sont intercalées à intervalles réguliers (I) entre les ailettes (18) du faisceau (14).

## Claims

1. Apparatus for regulating the flow of air through a heat exchanger which includes a bundle of finned tubes, the apparatus comprising a multiplicity of flap valves (24) mounted for pivoting movement about parallel axes (XX) and adapted to assume a multiplicity of different angular positions between an open position and a closed position, together with control means for actuating the flap valves, characterised in that each flap valve (24) is formed in one piece by moulding in a plastics material, and comprises a fixed plate portion (26) adapted to be interposed between two fins (18) of the bundle with the tubes (16) of the bundle extending through it, together with a movable plate portion (28) constituting a valve flap and joined to the fixed plate portion by at least one integral bridge (30) constituting a hinge about a pivot axis (XX).

2. Apparatus according to Claim 1, characterised in that the fixed plate portion has a geometric configuration analogous to that of a fin (18), and includes a multiplicity of holes (35) for tubes (16) of the bundle to extend therethrough, and for seaming of the plate portion on to the tubes.

3. Apparatus according to Claim 2, characterised in that the fixed plate portion (26) includes, close to the pivot axis (XX), at least one projecting nib (64) adapted to serve as an abutment for the movable plate portion (28) of an adjacent flap valve when the latter is in its closed position.

4. Apparatus according to one of Claims 1 to 3, characterised in that the movable plate portion (28) is generally rectangular, extending over substantially the same length as the fixed plate portion (26), and in that the fixed plate portion (26) and the movable plate portion (28) are joined together by at least two thin integral bridges (30) which are spaced apart in the direction of the pivot axis (XX).

5. Apparatus according to one of Claims 1 to 4, characterised in that the or each integral bridge (30) is formed by reduction of the thickness of the material so as to define a film hinge.

6. Apparatus according to one of Claims 1 to 5, characterised in that each flap valve (24) is formed by moulding in unfilled polypropylene.

7. Apparatus according to one of Claims 1 to 6, in which the pivot axes (XX) of the flap valves (24) are coplanar, characterised in that the control means comprise an arm (66) which is displaceable in straight line motion in one direction along an axis (YY) extending orthogonally to the pivot axes (XX) of the flap valves and at equal distances from these latter, the said arm (66) being coupled to the movable plate portion (28) of each flap valve by articulating means (78, 80).

8. Apparatus according to Claim 7, characterised in that the articulating means (78, 80) comprise a multiplicity of slots (78) formed in the arm (66), with each slot being arranged to receive a pivot finger (80) carried by the movable plate member (28) of a flap valve, the said pivot finger extending parallel to the pivot axis (XX) of the flap valve.

9. Apparatus according to Claim 7 or Claim 8, characterised in that the control means further comprise a temperature sensitive actuating member (84) adapted to effect the straight line displacement of the arm against a return spring (96).

10. A heat exchanger comprising a bundle of finned tubes, characterised in that it is equipped with an apparatus (12) for regulating the flow of air according to one of Claims 1 to 9, wherein the respective fixed plate portions (26) of its flap valves (24) are interposed at regular intervals (I) between the fins (18) of the tube bundle (14).

## Patentansprüche

1. Vorrichtung zum Steuern des Luftdurchflusses, durch einen Wärmetauscher mit einem Rippenrohrbündel, wobei diese Vorrichtung eine Vielzahl von Klappen (24), die schwenkbar um parallele Achsen (XX) montiert sind und dazu geeignet sind, eine Vielzahl von verschiedenen Winkelstellungen zwischen einer Öffnungsposition und einer Schließposition einzunehmen, sowie Steuermittel zum Betätigen der Klappen umfaßt, **dadurch gekennzeichnet,** daß jede Klappe (24) aus einem einzigen Teil durch Formung eines Kunststoffes gefertigt ist, und eine feste Platte (26), die dazu geeignet ist, zwischen zwei Rippen (18) des Rohrbündels eingesetzt und von den Rohren (16) des Rohrbündels durchquert zu werden, sowie eine bewegliche Platte (28) umfaßt, die die Klappe bildet und mit der festen Platte durch wenigstens eine Materialbrücke (30), die ein Scharnier um eine Schwenkachse (XX) bildet, verbunden ist.

2. Vorrichtung nach Anspruch 1, **dadurch gekennzeichnet,** daß die feste Platte (26) eine geometrische Gestaltung hat, die analog zu der geometrischen Gestaltung einer Rippe (16) ist und eine Vielzahl von Löchern (35) zum Durchtritt der Rohre (16) des Rohrbündels und zum Einsetzen der Platte auf die Rohre aufweist.

3. Vorrichtung nach Anspruch 2, **dadurch gekennzeichnet,** daß die feste Platte (26) in der Nähe der Schwenkachse (XX) wenigstens eine vorspringende Nase (64) umfaßt, die als Anschlag für die bewegliche Platte (28) einer benachbarten Klappe dient, wenn sich letztere in Schließposition befindet.

4. Vorrichtung nach einem der Ansprüche 1 bis 3, **dadurch gekennzeichnet,** daß die bewegliche Platte (28) eine generell rechtwinklige Form aufweist, die sich im wesentlichen auf derselben Länge wie die feste Platte (26) erstreckt, und daß die feste Platte (26) und die bewegliche Platte (28) miteinander durch wenigstens zwei Materialbrücken (30) von geringer Dicke, die voneinander in Richtung der Schwenkachse (XX) entfernt sind, verbunden sind.

5. Vorrichtung nach einem der Ansprüche 1 bis 4, **dadurch gekennzeichnet,** daß die oder jede Materialbrücke (30) durch Verringern der Dicke des Materials geformt wird, um ein Filmscharnier zu definieren.

6. Vorrichtung nach einem der Ansprüche 1 bis 5, **dadurch gekennzeichnet**, daß jede Klappe (24) durch Formung von unverstärktem Polypropylen gefertigt wird.

7. Vorrichtung nach einem der Ansprüche 1 bis 6, in der die Schwenkachsen (XX) der Klappen (24) in der gleichen Ebene liegen, **dadurch gekennzeichnet,** daß die Steuermittel einen Arm (66) umfassen, der parallel verschiebbar gemäß der Richtung einer Achse (YY) ist, die sich senkrecht zu den Schwenkachsen (XX) der Klappen und in gleichen Abstand zu den letzteren erstreckt, wobei dieser Arm (66) mit der beweglichen Platte (28) jeder Klappe über Anlenkmittel (78, 80) verbunden ist.

8. Vorrichtung nach Anspruch 7, **dadurch gekennzeichnet,** daß die Anlenkmittel eine Vielzahl von Schlitzen (78) umfassen, die in den Arm (66) eingebracht sind und jeder dazu dient, einen Schwenkfinger (80) aufzunehmen, der von der beweglichen Platte (28) einer Klappe getragen wird, wobei sich dieser Schwenkfinger parallel zur Schwenkachse (XX) der Klappe erstreckt.

9. Vorrichtung nach einem der Ansprüche 7 und 8, **dadurch gekennzeichnet,** daß die Steuermittel außerdem ein Antriebselement (84) umfassen, das temperaturempfindlich ist und dazu dient, auf die parallele Verschiebung des Arms beim Auftreffen auf eine Rückstellfeder (96) zu wirken.

10. Wärmetauscher, der ein Rippenrohrbündel umfaßt, **dadurch gekennzeichnet,** daß er mit einer Vorrichtung (12) zum Steuern des Luftdurchflusses nach einem der Ansprüche 1 bis 9 ausgestattet ist, deren feste Platten (26) der Klappen (24) in regelmäßigen Abständen (I) zwischen die Rippen (18) des Rohrbündels (14) eingesetzt werden.
